(19) Europäisches Patentamt / European Patent Office / Office européen des brevets

(11) **EP 3 776 113 B1**

(12) **EUROPEAN PATENT SPECIFICATION**

(45) Date of publication and mention
of the grant of the patent:
**07.06.2023 Bulletin 2023/23**

(21) Application number: **18811076.1**

(22) Date of filing: **26.10.2018**

(51) International Patent Classification (IPC):
$G05B\ 23/02^{(2006.01)}$    $G05B\ 13/02^{(2006.01)}$
$G06N\ 3/04^{(2023.01)}$    $G06N\ 3/08^{(2023.01)}$
$G05B\ 19/042^{(2006.01)}$    $G05B\ 19/418^{(2006.01)}$

(52) Cooperative Patent Classification (CPC):
**G05B 23/024; G05B 13/027; G05B 19/41875;
G06N 3/045; G06N 3/082; G06N 3/088;**
G05B 19/0428; G05B 2219/31263;
G05B 2219/31483; G05B 2219/32335; Y02P 90/02

(86) International application number:
**PCT/JP2018/040785**

(87) International publication number:
**WO 2019/187297 (03.10.2019 Gazette 2019/40)**

(54) **APPARATUS AND METHOD FOR CONTROLLING SYSTEM**

VORRICHTUNG UND VERFAHREN ZUR STEUERUNG EINES SYSTEMS

APPAREIL ET PROCÉDÉ DE COMMANDE D'UN SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2018 US 201815938411**

(43) Date of publication of application:
**17.02.2021 Bulletin 2021/07**

(73) Proprietor: **Mitsubishi Electric Corporation
Tokyo 100-8310 (JP)**

(72) Inventors:
• **GUO, Jianlin**
  **Cambridge, Massachusetts 02139 (US)**
• **LIU, Jie**
  **Cambridge, Massachusetts 02139 (US)**
• **ORLIK, Philip**
  **Cambridge, Massachusetts 02139 (US)**

(74) Representative: **Pfenning, Meinig & Partner mbB
Patent- und Rechtsanwälte
Theresienhöhe 11a
80339 München (DE)**

(56) References cited:
**EP-A1- 1 022 632**      **US-A- 5 386 373**

**US-A1- 2009 299 695**    **US-A1- 2017 031 329**
**US-A1- 2017 061 326**

• **Hwaran Lee ET AL: "Deep CNNs Along the Time
Axis With Intermap Pooling for Robustness to
Spectral Variations", IEEE Signal Processing
Letters, 1 October 2016 (2016-10-01), pages
1310-1314, XP055558409, New York DOI:
10.1109/LSP.2016.2589962 Retrieved from the
Internet:
URL:https://www.danielpovey.com/files/2015
_interspeech_multisplice.pdf [retrieved on
2019-02-19]**
• **Hwaran Lee ET AL: "Deep CNNs Along the Time
Axis With Intermap Pooling for Robustness to
Spectral Variations", IEEE Signal Processing
Letters, vol. 23, no. 10, 12 July 2016 (2016-07-12) ,
pages 1310-1314, XP055573579, USA ISSN:
1070-9908, DOI: 10.1109/LSP.2016.2589962**

Remarks:
The file contains technical information submitted after
the application was filed and not included in this
specification

**Description**

[Technical Field]

This invention relates generally to the anomaly and fault detection using machine learning techniques, and particularly to anomaly detection using neural networks.

[Background Art]

Monitoring and controlling safety and quality are very important in manufacturing, where fast and powerful machines can execute complex sequences of operations at very high speeds. Deviations from an intended sequence of operations or timing can degrade quality, waste raw materials, cause down times and broken equipment, decrease output. Danger to workers is a major concern. For this reason, extreme care must be taken to carefully design manufacturing processes to minimize unexpected events, and also safeguards need to be designed into the production line, using a variety of sensors and emergency switches.

The types of manufacturing include process and discrete manufacturing. In process manufacturing, products are generally undifferentiated, for example oil, natural gas and salt. Discrete manufacturing produces distinct items, e.g., automobiles, furniture, toys, and airplanes.

One practical approach to increasing the safety and minimizing the loss of material and output is to detect when a production line is operating abnormally, and stop the line down if necessary in such cases. One way to implement this approach is to use a description of normal operation of the production line in terms of ranges of measurable variables, for example temperature, pressure, etc., defining an admissible operating region, and detecting operating points out of that region. This method is common in process manufacturing industries, for example oil refining, where there is usually a good understanding of permissible ranges for physical variables, and quality metrics for the product quality are often defined directly in terms of these variables.

However, the nature of the working process in discrete manufacturing is different from that in process manufacturing, and deviations from the normal working process can have very different characteristics. Discrete manufacturing includes a sequence of operations performed on work units, such as machining, soldering, assembling, etc. Anomalies can include incorrect execution of one or more of tasks, or an incorrect order of the tasks. Even in anomalous situations, often no physical variables, such as temperature or pressure are out of range, so direct monitoring of such variables cannot detect such anomalies reliably.

For example, a method disclosed in U.S. 2015/0277416 describes an event sequence based anomaly detection for discrete manufacturing. However, this method has high error rate when the manufacturing system has random operations and may not be suitable for different types of the manufacturing systems. In addition, this method requires that one event can only occur once in the normal operations and does not consider the simultaneous event occurrence, which is frequent in complex manufacturing system.

To that end, there is a need to develop system and a method suitable for anomaly detection in different types of the manufacturing systems.

US 2017/0031329 A1 discloses that a fault prediction system includes a machine learning device that learns conditions associated with a fault of an industrial machine. The machine learning device includes a state observation unit that, while the industrial machine is in operation or at rest, observes a state variable including, e.g., data output from a sensor, internal data of control software, or computational data obtained based on these data, a determination data obtaining unit that obtains determination data used to determine whether a fault has occurred in the industrial machine or the degree of fault, and a learning unit that learns the conditions associated with the fault of the industrial machine in accordance with a training data set generated based on a combination of the state variable and the determination data.

EP 1022632 A1 discloses a monitoring diagnostic apparatus for detecting the normal or abnormal functionality of electrical such as circuit breakers, switches, disconnecting switches, oil-insulated electrical equipment, vacuum-insulated electrical equipment, air-insulated electrical equipment, solid insulated electrical equipment, through the use of a neural network to model the normal or abnormal functionality of the electrical device and to identify the cause of said abnormal functionality, if present.

[Summary of Invention]

The present invention is as defined in the appended set of claims.

Some embodiments are based on the recognition that classes or types of the manufacturing operations can include process manufacturing and discrete manufacturing. For example, the anomaly detection methods for process manufacturing can aim to detect outliers of the data and anomaly detection methods for discrete manufacturing can aim to detect correct order of the operation executions. To that end, it is natural to design different anomaly detection methods for different class of manufacturing operations.

However, complex manufacturing systems can include different types of the manufacturing including the process and the discrete manufacturing. When the process and the discrete manufacturing are intermingled on a signal production line, the anomaly detection methods designed for different types of the manufacturing can be inaccurate. To that end, it is an object of some embodiments to provide a system and a method suitable for anomaly detection in different types of the manufacturing systems.

Some embodiments are based on recognition that the machine learning techniques can be applied for anomaly detection for both the process manufacturing and the discrete manufacturing. Using machine learning, the collected data can be utilized in an automatic learning system, where the features of the data can be learned through training. The trained model can detect anomaly in real time data to realize predictive maintenance and downtime reduction.

For example, neural network is one of the machine learning techniques that can be practically trained for complex manufacturing systems that include different types of the manufacturing. To that end, some embodiments apply neural network methods for anomaly detection in manufacturing systems. Using neural networks, additional anomalies that are not obvious from domain knowledge can be detected.

Accordingly, some embodiments provide machine learning based anomaly detection methods that can be applied to both process manufacturing and discrete manufacturing with improved accuracy. For example, different embodiments provide neural network based anomaly detection methods for manufacturing systems to detect anomaly through supervised learning and unsupervised learning.

However, one of the challenges in the field of neural networks is to find a minimal neural network topology that still satisfies application requirements. Manufacturing systems typically have huge amount of data. Therefore, fully connected neural network may be computationally expensive or even impractical for anomaly detection in the complex manufacturing systems.

In addition, some embodiments are based on understanding that pruning the fully connected neural network trained to detect anomalies in the complex manufacturing systems degrades the performance of the anomaly detection. Specifically, some embodiments are based on the recognition that neural network pruning takes place during the neural network training process, which increases neural network complexity and training time, and also degrades anomaly and fault detection accuracy.

Some embodiments are based on recognition that a neural network is based on a collection of connected units or nodes called artificial neurons or just neurons. Each connection between artificial neurons can transmit a signal from one to another. The artificial neuron that receives the signal can process and transmit the processed signal to other artificial neurons connected to it. In such a manner, for the neurons receiving the signal from another neuron, that transmitting neuron is a source of that signal.

To that end, some embodiments are based on realization that each neuron of at least some layers of the neural network can be matched with a source of signal in the manufacturing system. Hence, the source of signal in the manufacturing system is represented by a neuron in a layer of the neural network. In such a manner, the number of neurons in the neural network can be selected as minimally required to represent the physical structure of the manufacturing system.

In addition, some embodiments are based on recognition that a neural network is a connectionist system that attempts to represent mental or behavioral phenomena as emergent processes of interconnected networks of simple units. In such a manner, the structure of the neural network can be represented not only by a number of neurons at each level of the neural network, but also as the connection among those neurons.

Some embodiments are based on realization that when the neurons of the neural network represent the sources of signals in the manufacturing system, the connection among the neurons of the neural network can represent the connection among the sources of signals in the manufacturing system. Specifically, the neurons can be connected if and only if the corresponding sources of signals are connected.

Some embodiments are based on realization that the connection between two different sources of signals for the purpose of anomaly detection is a function of a frequency of subsequent occurrence of the events originated by these two different sources of signals. For example, let's say that a source of signal is a switch that can change its state from ON to OFF state. The change of the state and/or a new value of the state is a signal of the source. If, when a first switch changes the state the second switch always changes its state, those two source of signals are strongly connected and thus the neurons in the neural network corresponding to this pair of switches is connected as well. Conversely, if, when a first switch changes the state the second switch never changes its state, those two source of signals are not connected and thus the neurons in the neural network corresponding to this pair of switches is not connected as well.

In practice, always following or never following events rarely happen. To that end, in some embodiments, a pair of different sources of signals are connected in the neural network only when a probability of subsequent occurrence of the events in the pair of the different sources of signals is above a threshold. The threshold is application dependent, and the probability of subsequent occurrence of the events can be selected based on a frequency of such a subsequent occurrence in a training data, e.g., used to train neural network.

In such a manner, the connections of the neurons represent connectionist system mimicking the connectivity within the manufacturing system. To that end, the neural network of some embodiments becomes partially connected network having topology based on event ordering relationship, which reduces the neural network complexity and training time, and improves anomaly detection accuracy.

Accordingly, an embodiment discloses an apparatus for controlling a system according to independent claim 1.

Another embodiment discloses a method according to independent claim 10.

Yet another embodiment discloses a non-transitory computer readable storage medium according to independent claim 14.

[Brief Description of Drawings]

[Fig. 1]

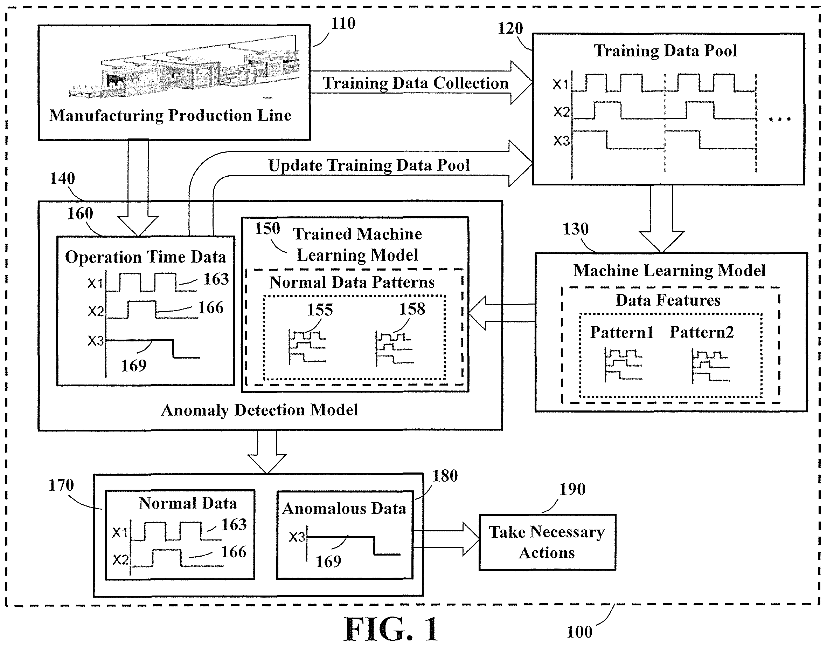

FIG. 1 is a schematic diagram illustrating components of the manufacturing anomaly detection system 100 according to some embodiments.

[Fig. 2]

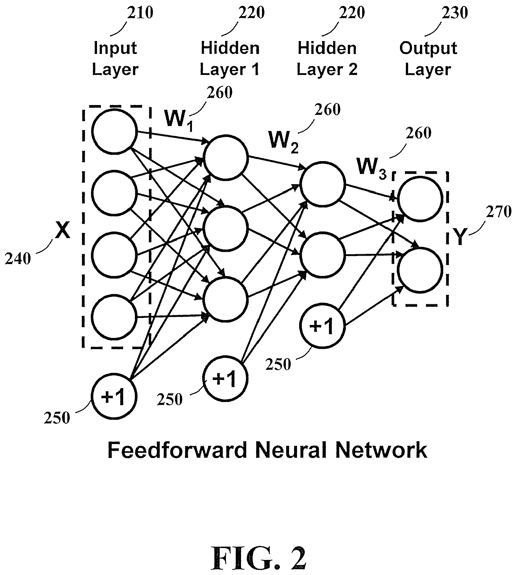

Fig. 2 shows a schematic of a feedforward neural network used by some embodiments for supervised machine learning.

[Fig. 3]

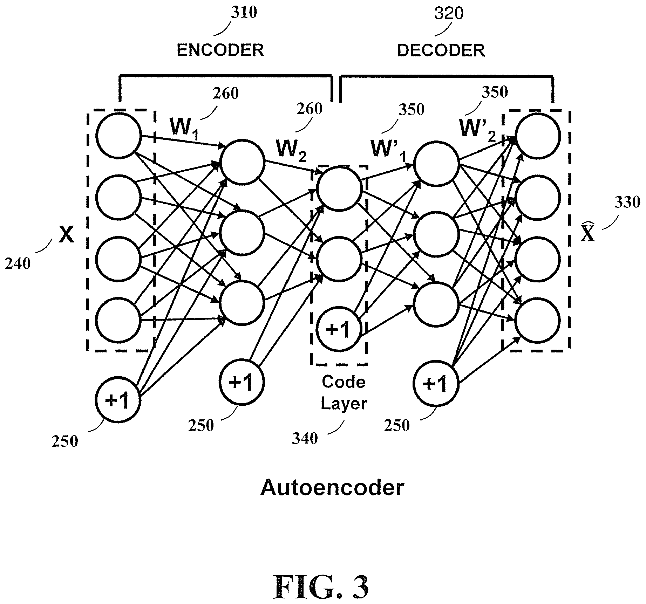

Fig. 3 shows a schematic of an autoencoder neural network used by some embodiments for unsupervised machine learning.

[Fig. 4A]

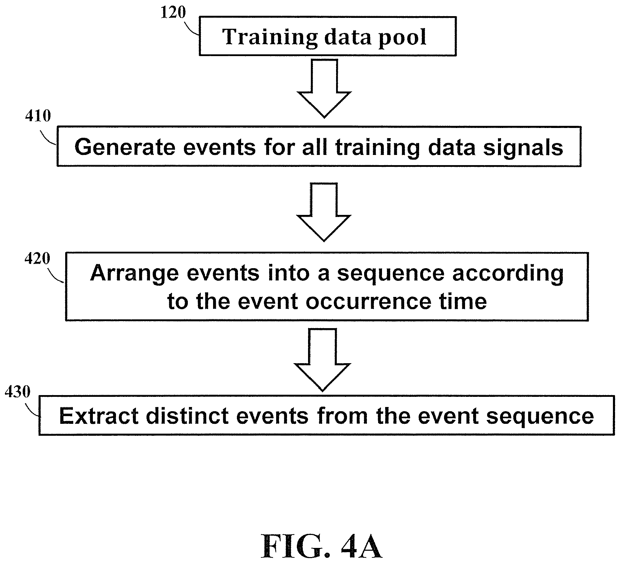

Fig. 4A illustrates general process of event sequence generation and distinct event extraction used by some embodiments.

[Fig. 4B]

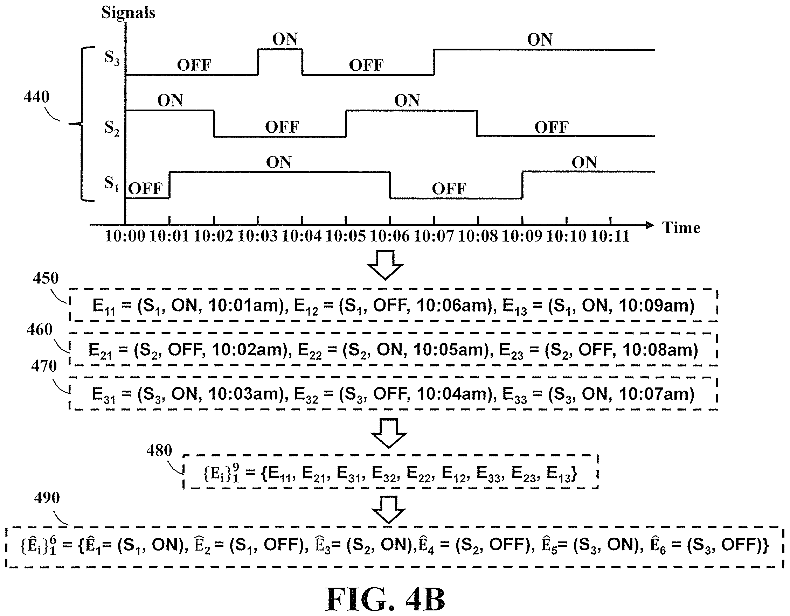

Fig. 4B shows an example of event sequence generation and distinct event extraction of Fig. 4A using three switch signals.

[Fig. 5A]

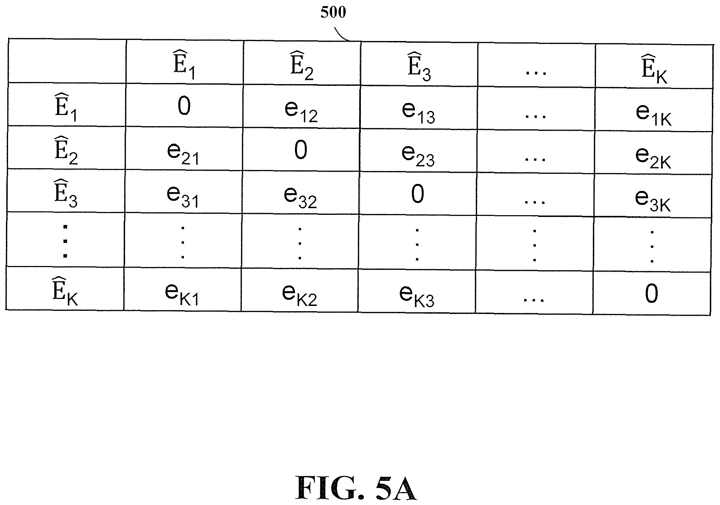

Fig. 5A shows general form of the event ordering relationship table used by some embodiments.

[Fig. 5B]

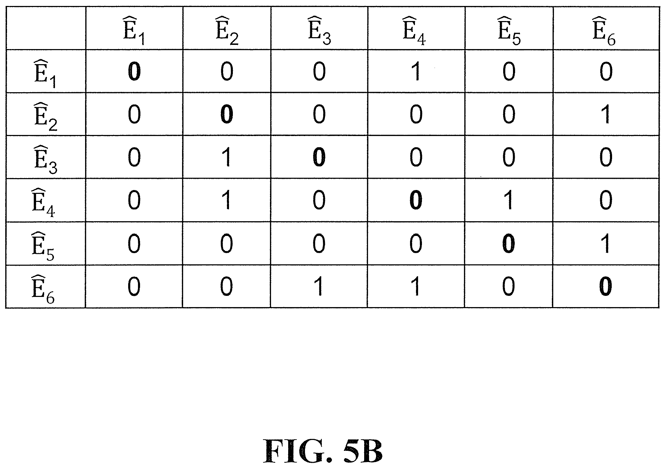

Fig. 5B shows an example of the event ordering relationship table for the event sequence and distinct events shown in Fig. 4B.

[Fig. 6A]

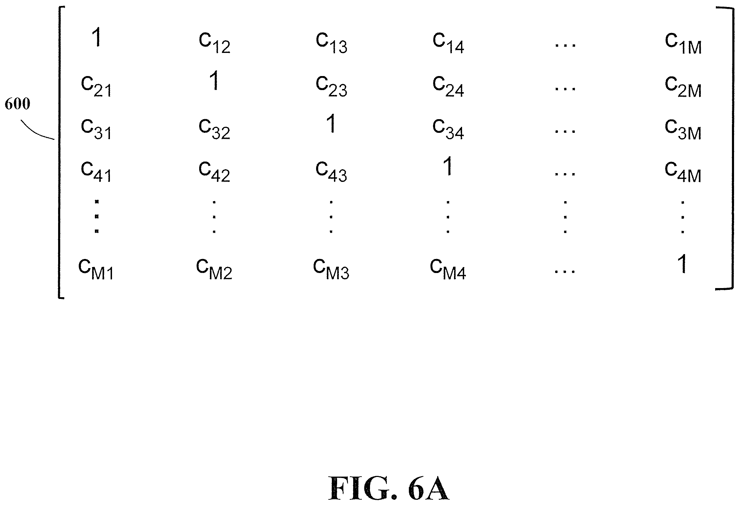

Fig. 6A shows general form of the signal connection matrix generated from the order relationship table according to some embodiments.

[Fig. 6B]

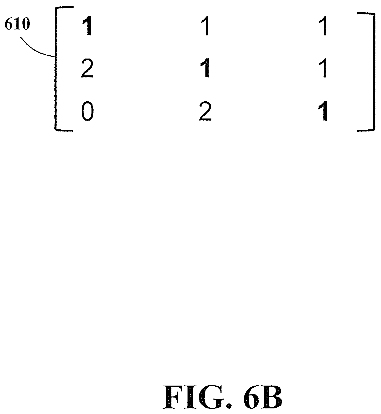

Fig. 6B is an example of signal connection matrix corresponding to the event ordering relationship table shown in Fig. 5B.

[Fig. 7]

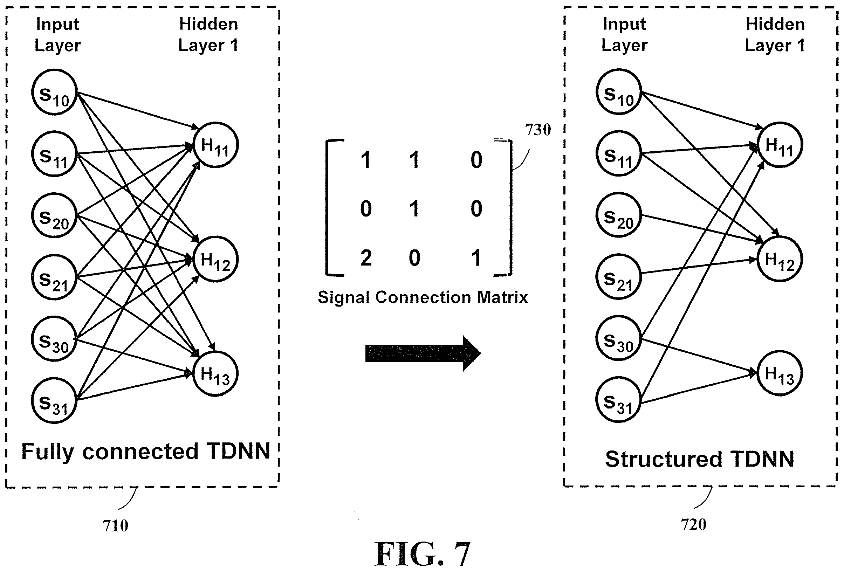

Fig. 7 shows an example of converting a fully connected time delay neural network (TDNN) to a simplified structured TDNN using a signal connection matrix according to some embodiments.

[Fig. 8A]

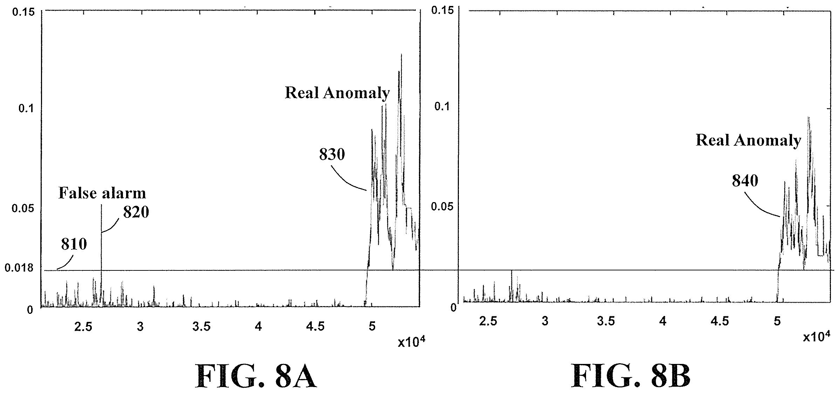

Fig. 8A shows the experiment result comparison between fully connected autoencoder neural network and the structured autoencoder neural network constructed according to some embodiments.

[Fig. 8B]

Fig. 8B shows the experiment result comparison between fully connected autoencoder neural network and the structured autoencoder neural network constructed according to some embodiments.

[Fig. 9]

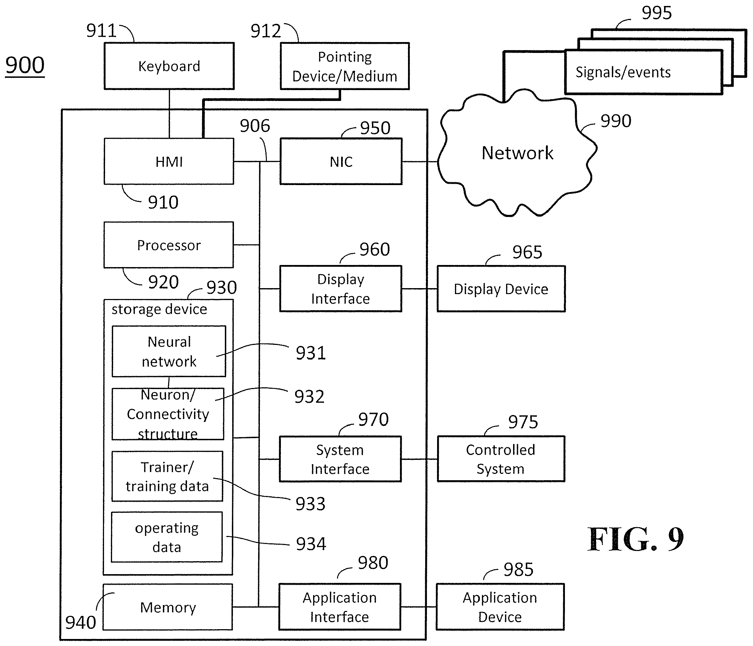

Fig. 9 shows a block diagram of apparatus 900 for controlling a system including a plurality of sources of signals causing a plurality of events in accordance with some embodiments.

[Fig. 10A]

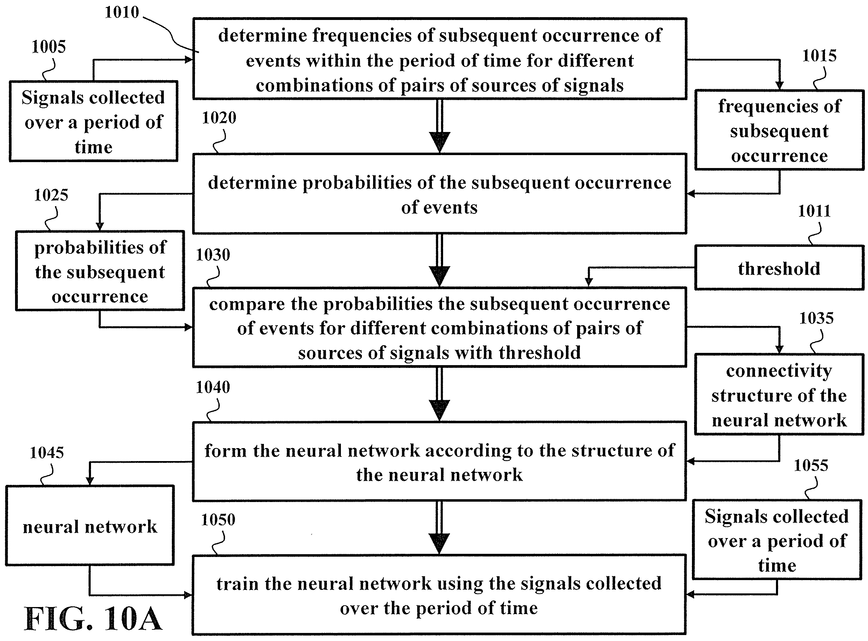

Fig. 10A shows a block diagram of a method to train the neural network according to one embodiment.

[Fig. 10B]

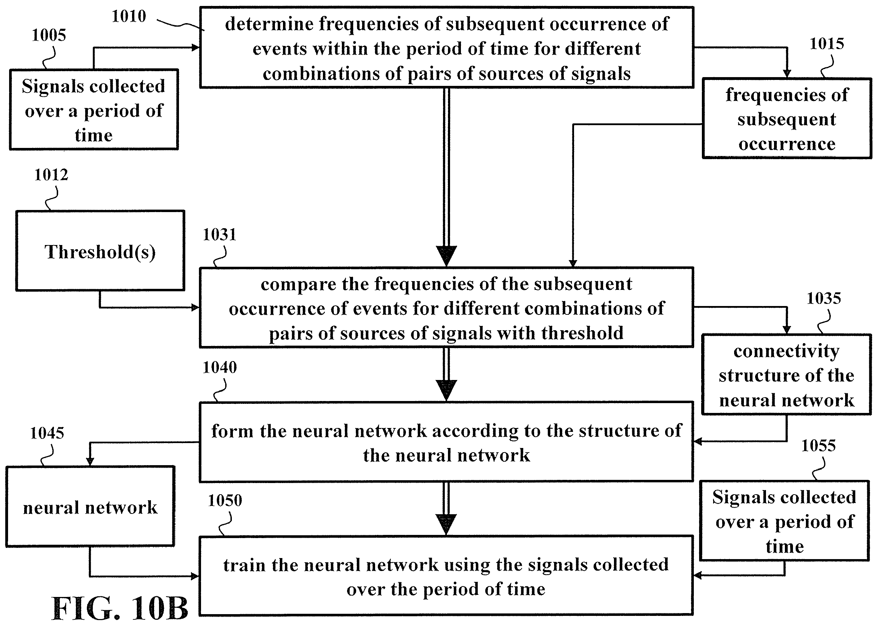

Fig. 10B shows a block diagram of a method to train the neural network according to an alternative embodiment.

[Description of Embodiments]

**Overview**

FIG. 1 is a schematic diagram illustrating components of the manufacturing anomaly detection system 100 according to some embodiments. The system 100 includes manufacturing production line 110, a training data pool 120, machine learning model 130 and anomaly detection model 140. The production line 110 uses sensors to collect data. The sensor can be digital sensors, analog sensors, and combination thereof. The collected data serve two purposes, some of data are stored in training data pool 120 and used as training data to train machine learning model 130 and some of data are used as operation time data by anomaly detection model 140 to detect anomaly. Same piece of data can be used by both machine learning model 130 and anomaly detection model 140.

To detect anomaly in a manufacturing production line 110, the training data are first collected. The training data in training data pool 120 are used by machine learning model 130 to train a neural network. The training data pool 120 can include either labeled data or unlabeled data. The labeled data have been tagged with labels, e.g., anomalous or normal. Unlabeled data have no label. Based on types of training data, machine learning model 130 applies different training approaches. For labeled training data, supervised learning is typically used and for unlabeled training data, unsupervised learning is typically applied. In such a manner, different embodiments can handle different types of data.

Machine learning model 130 learns features and patterns of the training data, which include the normal data patterns and abnormal data patterns. The anomaly detection model 140 uses the trained machine learning model 150 and the collected operation time data 160 to perform anomaly detection. The operation time data 160 can be identified normal or abnormal. For example, using normal data patterns 155 and 158, the trained machine learning model 150 can classify operation time data into normal data 170 and abnormal data 180. Operation time data X1 163 and X2 166 are classified as normal and operation time data X3 169 is classified as anomalous. Once anomaly is detected, necessary actions are taken 190.

The anomaly detection process can be executed online or offline. Online anomaly detection can provide real time predictive maintenance. However, online anomaly detection requires fast computation capability, which in turn require simple and accurate machine learning model. The embodiments of the invention provide fast and accurate machine learning model.

**Neural networks for anomaly detection in manufacturing systems**

Neural network can be employed to detect anomaly through both supervised learning and unsupervised learning. Some embodiments apply time delay neural network (TDNN) for anomaly detection in manufacturing systems. Using time delay neural network, not only current data but also historic data are used as input to neural network. The number of time delay steps is the parameter to specify number of historic data measurements to be used, e.g., if the number of time delay steps is 3, then data at current time t, data at time t-1 and data at time t-2 are used. Therefore, size of time delay neural network depends on the number of time delay steps. The time delay neural network architecture explores the relation of data signals in time domain. In manufacturing systems, the history of data signals may provide important future prediction.

A TDNN can be implemented as a time delay feedforward neural network (TFFNN) or a time delay autoencoder neural network (TDANN). For anomaly detection in manufacturing systems, some embodiments apply the time delay feedforward neural network and some embodiments apply the time delay autoencoder neural network.

Fig. 2 shows a schematic of a feedforward neural network used by some embodiments for supervised machine learning. A feedforward neural network is an artificial neural network wherein connections between the neurons do not form cycle. For the supervised learning, training data are labeled as either normal or abnormal. Under this condition, the supervised learning techniques are applied to the training model. The embodiments employ the time delay feedforward neural network to detect anomaly with labeled training data. For example, the feedforward neural network shown in Fig. 2 includes the input layer 210, multiple hidden layers 220 and output layer 230. The input layer 210 takes data signals X 240 and transfers the extracted features through the weight vector $W_1$ 260 and the activation function, e.g., Sigmoid function, to the first hidden layer. In the case of the time delay feedforward neural network, input data X 240 includes both current data and historic data. Each hidden layer 220 takes the output of the previous layer and bias 250 and transfers the extracted features to next layer. The value of bias is positive 1. The bias allows neural network to shift the activation function to the left or the right, which can be critical for successful learning. Therefore, the bias plays similar role as the constant b of a linear function y = ax + b. After multiple hidden layers of the feature extraction, neural network reaches to the output layer 230, which takes the output of the last hidden layer and bias 250 and uses a specific loss function, e.g., Cross-Entropy function, and formulates the corresponding optimization problem to produce final output Y 270, which classifies the test data as normal or abnormal.

The manufacturing data may be collected under normal operation condition only since anomaly rarely happens in manufacturing system or the anomalous data are difficult to collect. Under this circumstance, the data are usually not labeled and therefore, the unsupervised learning techniques can be useful. In this case, some embodiments apply the time delay autoencoder neural network to detect anomaly.

Fig. 3 shows a schematic of an autoencoder neural network used by some embodiments for unsupervised machine learning. An autoencoder neural network is a special artificial neural network to reconstruct the input data signals X 240 with the encoder 310 and the decoder 320 composed of a single or multiple hidden layers as shown in Fig. 3, where X 330 is the reconstructed data from the input data signals X 240. The reconstruction gives X = X. For the time delay autoencoder neural network, input data X 240 includes both current data and historic data. The compressed features appear in the middle layer usually called the code layer 340 in the network structure. An autoencoder neural network can also take bias 250. There are two types of autoencoder neural networks, i.e., tied weight and untied weight. The tied weight autoencoder neural network has a symmetric topology, in which weight vector $W_i$ 260 on the encoder side is same as the weight vector $W'_i$ 350 on the decoder side. On the other hand, for the untied weight autoencoder neural network, the topology of the network is not necessarily symmetric and weight vectors on the encoder side are not necessarily same as weight vectors on decoder side.

**Event ordering relationship based neural network structure**

In a manufacturing system, tens to hundreds or thousands of sensors are used to collect data, which indicates that the amount of data is huge. As a result, size of the neural network applied to detect anomaly can be very large. Therefore, the problem of determining the proper size of the neural network is important.

Some embodiments address the problem of determining the proper size of neural network. Even though the fully connected neural networks can learn its weights through training, appropriately reducing the complexity of the neural network can reduce computational cost and improve anomaly detection accuracy. To that end, it is an object of some embodiments to reduce neural network size without degrading the performance.

The complexity of the neural network depends on the number of neurons and the number of connections between neurons. Each connection is represented by a weight parameter. Therefore, reducing the complexity of the neural network is to reduce the number of weights and/or the number of neurons. Some embodiments aim to reduce neural network complexity without degrading the performance.

One approach for tackling this problem is referred herein as pruning and includes training a larger than necessary network and then removing unnecessary weights and/or neurons. Therefore, the pruning is a time consuming process.

The question is which weights and/or neurons are unnecessary. The conventional pruning techniques typically remove the weights with smaller values. There is no proof that the smaller weights are unnecessary. As a result, the pruning inevitably degrades the performance compared with fully connected neural network due to pruning loss. Therefore, the pruning candidate selection is of prime importance.

Some embodiments provide an event ordering relationship based neural network structuring method, which make pruning candidate selection based on event ordering relationship information. Furthermore, instead of removing unnecessary weights and/or neurons during training process, the embodiments determine a neural network structure before the training. Notably, such a structure of partially connected neural network determined by some embodiments outperforms the fully connected neural network. The structured neural network reduces training time and improves anomaly detection accuracy. More precisely, the embodiments pre-process training data to find the event ordering relationship, which is used to determine important neuron connections of the neural network. The unimportant connections and the isolated neurons are then removed from neural network.

To describe event ordering relationship based neural network structuring method, the data measurement collected from a sensor that monitors a specific property of the manufacturing system is called as a data signal, e.g., a voltage sensor measures voltage signal. A sensor may measure multiple data signals. The data signals can be measured periodically or aperiodically. In the case of periodic measurement, the time periods for measuring different data signals can be different.

For a data signal, an event is defined as signal value change from one level to another level. The signal changes can be either out of admissible range or in admissible range. More specifically, an event is defined as

$$E = \{S, ToS, T\} \qquad (1)$$

where S represents data signal that results in the event, ToS indicates type of event for signal S and T is the time at which the signal value changed. For example, a switch signal can have an ON event and an OFF event. Therefore, an event may correspond to a normal operation execution or an anomalous incident in the system.

For processing manufacturing, an event can represent abnormal status such as measured data being out of admissible operating range or normal status such as system changes from one state to another state. For discrete manufacturing, an event can represent an operation execution in correct order or in incorrect order.

Before training neural network, the training data are processed to extract events for all training data signals. These events are used to build an event ordering relationship (EOR) table.

Assume there are M data signals $\{S_i\}_1^M$, which generate N events. According to event occurring time, arrange these events into an event sequence $\{E_i\}_1^N$. Because a type of the event may occur multiple times, assume event sequence $\{E_i\}_1^N$ contains K distinct events $\{\hat{E}_i\}_1^K$, where each $\hat{E}_i$ (i = 1,2,...,K) has a format of {S, ToS}.

Fig. 4A illustrates general process of event sequence generation and distinct event extraction used by some embodiments. For each data signal in training data pool 120, a set of events is created 410 based on the changes of the signal value, the corresponding event types and the corresponding times of the signal value changes. After events are generated for all training data signals, the events are arranged into an event sequence 420 according to the event occurrence time. If multiple events occurred at same time, these events can appear in any order in the event sequence. Once event sequence is created, the distinct events are extracted 430 from the event sequence. A distinct event only represents an event type without regarding the event occurrence time.

Fig. 4B illustrates an example of event sequence generation using three switch signals $S_1$, $S_2$ and $S_3$ 440. These switch signals can generate the events. If a switch signal changes its value from 0 to 1, an ON event is generated. On the other hand, if a switch signal changes its value from 1 to 0, an OFF event is generated. Each switch signal generates three ON/OFF events at different times. Signal $S_1$ generates three events 450 $\{E_{11}, E_{12}, E_{13}\}$, Signal $S_2$ generates three events 460 $\{E_{21}, E_{22}, E_{23}\}$ and Signal $S_3$ creates three events 470 $\{E_{31}, E_{32}, E_{33}\}$. According to event occurrence time, these nine events forms an event sequence 480 as $\{E_{11}, E_{21}, E_{31}, E_{32}, E_{22}, E_{12}, E_{33}, E_{23}, E_{13}\}$. This event sequence contains six distinct events 490 as $\{\hat{E}_1, \hat{E}_2, \hat{E}_3, \hat{E}_4, \hat{E}_5, \hat{E}_6\}$ = {$S_1$-ON, $S_1$-OFF, $S_2$-ON, $S_2$-OFF, $S_3$-ON, $S_3$-OFF}.

Fig. 5A shows general form of an event ordering relationship table used by some embodiments. Specifically, using event sequence $\{E_i\}_1^N$ and the distinct events $\{\hat{E}_i\}_1^K$, the event ordering relationship (EOR) table 500 can be built as shown in Fig. 5A, where $e_{ij}$ ($i \neq j$) is initialized to 0. In some implementations, during EOR table construction process, $e_{ij}$ is increased by 1 for each event pair {$\hat{E}_i$, $\hat{E}_j$} occurrence in event sequence $\{E_i\}_1^N$. If event $\hat{E}_i$ and $\hat{E}_j$ occur at same time, both $e_{ij}$ and $e_{ji}$ are increased by 1/2. Alternative embodiments use different values to build the EOR table. In any case, $e_{ij}$ ($i \neq j$) indicates the number of times event $\hat{E}_j$ following event $\hat{E}_i$. A larger $e_{ij}$ indicates that event $\hat{E}_j$ tightly follows event $\hat{E}_i$, a smaller $e_{ij}$ implies that event $\hat{E}_j$ loosely follows event $\hat{E}_i$, and $e_{ij} = 0$ indicates that event $\hat{E}_j$ never follows event $\hat{E}_i$. If both $e_{ij}$ and $e_{ji}$ are greater than zero, event $\hat{E}_i$ and event $\hat{E}_j$ can occur in either order.

Fig. 5B shows an example of the event ordering relationship table for the event sequence and distinct events shown in Fig. 4B.

The event ordering relationship (EOR) table 500 is used by some embodiments to construct neural network connections. Based on event ordering relationship table, a signal connection matrix (SCM) is constructed. The signal connection matrix provides the neural network connectivity structure.

Fig. 6A shows general form of the signal connection matrix generated from the event ordering relationship table according to some embodiments. In this case, a M by M signal connection matrix (SCM) 600 is constructed, where $c_{ij}$ ($i \neq j$) represents the number of times events of signal $S_j$ following events of signal $S_i$. Therefore, $c_{ij} = 0$ indicates event of signal $S_j$ never follows event of signal $S_i$. A higher value of $c_{ij}$ indicates that signal $S_j$ tightly depends on signal $S_i$ in the sense that the change of signal $S_i$ may most likely cause the change of signal $S_j$. On the other hand, a lower value of $c_{ij}$ implies that signal $S_j$ loosely depends on signal $S_i$. A threshold $C_{TH}$ can be defined for the neural network connection configuration such that if $c_{ij} \geq C_{TH}$, then signal $S_i$ can be considered to impact signal $S_j$. In this case, the connections from neurons corresponding to signal $S_i$ to the neurons corresponding to signal $S_j$ are considered as important. On the other hand, if $c_{ij} < C_{TH}$, the connections from neurons corresponding to signal $S_i$ to the neurons corresponding to signal $S_j$ are considered as unimportant.

Alternatively, the signal connection matrix can also be used to define the probability of the subsequent occurrence of events for a pair of data signals. For two signals $S_i$ and $S_j$, $c_{ij}$ represents the number of times events of signal $S_i$ followed by events of signal $S_j$. Therefore, the probability of subsequent occurrence of the events of signals $S_i$ followed by events of $S_j$ can be defined as

$$P\left(S_i, S_j\right) = \frac{c_{ij}}{\sum_{j=1}^{M}\sum_{i=1}^{M} c_{ij} - M} \qquad (2)$$

Notice that P(Si, $S_j$) and P($S_j$, $S_i$) can be different, i.e., signal $S_i$ may impact signal $S_j$, but signal $S_j$ may not necessarily impact signal $S_i$. Using this probability, a threshold $P_{TH}$ can be defined such that if P($S_i$, $S_j$) ≥ $P_{TH}$, then signal $S_i$ can be considered to impact signal $S_j$. Therefore, the connections from neurons corresponding to signal $S_i$ to the neurons corresponding to signal $S_j$ are considered as important.

Fig. 6B is an example of signal connection matrix 610 corresponding to the event ordering relationship table shown in Fig. 5B. The signal connection matrix (SCM) 600 and/or 610 can be used to simplify the fully connected neural networks.

Fig. 7 shows an example of converting a fully connected TDNN 710 to a simplified structured TDNN using signal connection matrix 730 according to some embodiments, wherein the TDNN can be the time delay feedforward neural network or the time delay autoencoder neural network. Assume three data signals are {$S_1$, $S_2$, $S_3$}, the number of time delay steps is 2 and connection threshold $C_{TH}$ = 1. The $s_{i0}$ and $s_{i1}$ (1 ≤ i ≤ 3) denote measurements of signal $S_i$ at time t and time t-1, which correspond to the nodes $S_{i0}$ and $S_{i1}$ (1 ≤ i ≤ 3) in the neural network of Fig. 7. In this example, the structure from the input layer to the first hidden layer of the neural network is illustrated because these two layers have the most influence on the topology of the neural network. It can be seen that the number of nodes at the input layer is six, i.e., number of data signals multiplied by number of time delay steps, and the number of nodes at the first hidden layer is three, i.e., number of data signals. The objective of the first hidden layer node configuration is to concentrate features related to a specific data signal to a single hidden node.

In this example, for the fully connected TDNN, there are total 18 connections. Using the signal connection matrix 730, 18 connections are reduced to 10 connections in the structured TDNN. For example, $c_{12}$ = 1 = $C_{TH}$ indicates that signal $S_1$ may impact signal $S_2$. Therefore, connections from $S_{10}$ and $S_{11}$ to $H_{12}$ are important because $H_{12}$ is used to collect information for signal $S_2$. On the other hand, $c_{13}$ = 0 < $C_{TH}$ indicates that connections from $S_{10}$ and $S_{11}$ to $H_{13}$ are not important and therefore, can be removed from neural network.

Fig. 8A and Fig. 8B show the experiment result comparison between fully connected autoencoder neural network and the structured autoencoder neural network constructed according to some embodiments. Specifically, Fig. 8A shows experiment result of the fully connected autoencoder neural network and Fig. 8B depicts experiment result of the corresponding structured autoencoder neural network. Y-axis represents the test error and X-axis represents the time index, which converts data collection time to the integer index such that a value of the time index uniquely corresponds to the time of the data measurement. The data are collected from real manufacturing production line with a set of the unlabeled training data and a set of the test data, i.e., operation time data. During test data collection, an anomaly occurred in the production line. The anomaly detection method is required to detect if the test data is anomalous. If yes, the anomaly occurrence time is required to be detected.

For the test error threshold 810 = 0.018, Fig. 8A shows that the fully connected autoencoder neural network detected two anomalies, one corresponding to test error 820 and other corresponding to test error 830. The anomaly corresponding to test error 820 is a false alarm and the anomaly corresponding to test error 830 is the true anomaly. On the other hand, the structured autoencoder neural network only detected true anomaly corresponding to test error 840. Therefore, the structured autoencoder neural network is more accurate than the fully connected autoencoder neural network. Fig. 8A and Fig. 8B also show that the anomalous time index of the true anomaly detected by both methods is same, which corresponds to a time 2 seconds later than actual anomaly occurrence time.

**Exemplar Embodiment**

Fig. 9 shows a block diagram of apparatus 900 for controlling a system including a plurality of sources of signals causing a plurality of events in accordance with some embodiments. An example of the system is a manufacturing production line. The apparatus 900 includes a processor 920 configured to execute stored instructions, as well as a memory 940 that stores instructions that are executable by the processor. The processor 920 can be a single core processor, a multi-core processor, a computing cluster, or any number of other configurations. The memory 940 can include random access memory (RAM), read only memory (ROM), flash memory, or any other suitable memory systems. The processor 920 is connected through a bus 906 to one or more input and output devices.

These instructions implement a method for detecting and/or diagnosing anomaly in the plurality of events of the system. The apparatus 900 is configured to detect objects anomalies using a neural network 931. Such a neural network is referred herein as a structured partially connected neural network. The neural network 931 is trained to diagnose a control state of the system. For example, the neural network 931 can be trained offline by a trainer 933 using training data to diagnose the anomalies online using the operating data 934 of the system. Examples of the operating data include signals from the source of signals collected during the operation of the system, e.g., events of the system. Examples of the training data include the signals from the source of signals collected over a period of time. That period of time can be before the operation/production begins and/or a time interval during the operation of the system.

Some embodiments are based on recognition that a neural network is based on a collection of connected units or nodes called artificial neurons or just neurons. Each connection between artificial neurons can transmit a signal from one to another. The artificial neuron that receives the signal can process and transmit the processed signal to other artificial neurons connected to it. In such a manner, for the neurons receiving the signal from another neuron, that transmitting neuron is a source of that signal.

To that end, some embodiments are based on realization that each neuron of at least some layers of the neural network can be matched with a source of signal in the manufacturing system. Hence, the source of signal in the manufacturing system is represented by a neuron in a layer of the neural network. In such a manner, the number of neurons in the neural network can be selected as minimally required to represent the physical structure of the manufacturing system.

In addition, some embodiments are based on recognition that a neural network is a connectionist system that attempts to represents mental or behavioral phenomena as emergent processes of interconnected networks of simple units. In such a manner, the structure of the neural network can be represented not only by a number of neurons at each level of the neural network, but also as the connection among those neurons.

Some embodiments are based on realization that when the neurons of the neural network represent the sources of signals in the manufacturing system, the connection among the neurons of the neural network can represent the connection among the sources of signals in the manufacturing system. Specifically, the neurons can be connected if and only if the corresponding sources of signals are connected.

Some embodiments are based on realization that the connection between two different sources of signals for the purpose of anomaly detection is a function of a frequency of subsequent occurrence of the events originated by these two different sources of signals. For example, let's say that a source of signal is a switch that can change its state from ON to OFF state. The change of the state and/or a new value of the state is a signal of the source. If, when a first switch changes the state the second switch always changes its state, those two source of signals are strongly connected and thus the neurons in the neural network corresponding to this pair of switches is connected as well. Conversely, if, when a first switch changes the state the second switch never changes its state, those two source of signals are not connected and thus the neurons in the neural network corresponding to this pair of switches is not connected as well.

In practice, always following or never following events rarely happen. To that end, in some embodiments, a pair of different sources of signals are connected in the neural network only when a probability of subsequent occurrence of the events in the pair of the different sources of signals is above a threshold. The threshold is application dependent, and the probability of subsequent occurrence of the events can be selected based on a frequency of such a subsequent occurrence in a training data, e.g., used to train neural network.

In such a manner, the connections of the neurons represent connectionist system mimicking the connectivity within the manufacturing system. To that end, the neural network of some embodiments becomes partially connected network having topology based on event ordering relationship, which reduces the neural network complexity and training time, and improves anomaly detection accuracy.

The neural network 931 includes a sequence of layers, each layer includes a set of nodes, also referred herein as neurons. Each node of at least an input layer and a first hidden layer following the input layer corresponds to a source of signal in the system. In the neural network 931, a pair of nodes from the neighboring layers corresponding to a pair of different sources of signals are connected in the neural network only when a probability of subsequent occurrence of the events in the pair of the different sources of signals is above a threshold. In a number of implementations, the neural network 931 is a partially connected neural network.

To that end, the apparatus 900 can also include a storage device 930 adapted to store the neural network 931 and/or a structure 932 of the neural network including the structure of neurons and their connectivity representing a sequence of events in the controlled system. In addition, the storage device 930 can store a trainer 933 to train the neural network 931 and data 934 for detecting the anomaly in the controlled system. The storage device 930 can be implemented using a hard drive, an optical drive, a thumb drive, an array of drives, or any combinations thereof.

The apparatus 900 includes an input interface to receive signals from the sources of signals of the controlled system. For example, in some implementations, the input interface includes a human machine interface 910 within the apparatus 900 that connects the processor 920 to a keyboard 911 and pointing device 912, wherein the pointing device 912 can include a mouse, trackball, touchpad, joy stick, pointing stick, stylus, or touchscreen, among others.

Additionally, or alternatively, the input interface can include a network interface controller 950 adapted to connect the apparatus 900 through the bus 906 to a network 990. Through the network 990, the signals 995 from the controlled system can be downloaded and stored within the storage system 930 as training and/or operating data 934 for storage and/or further processing. The network 990 can be wired or wireless network connecting the apparatus 900 to the sources of the controlled system or to an interface of the controlled system for providing the signals and metadata of the signal useful for the diagnostic.

The apparatus 900 includes a controller to execute a control action selected according to the control state of the system. The control action can be configured and/or selected based on a type of the controlled system. For example, the controller can render the results of the diagnosis. For example, the apparatus 900 can be linked through the bus 906 to a display interface 960 adapted to connect the apparatus 900 to a display device 965, wherein the display device 965 can include a computer monitor, camera, television, projector, or mobile device, among others.

Additionally, or alternatively, the controller can be configured to directly or indirectly control the system based on results of the diagnosis. For example, the apparatus 900 can be connected to a system interface 970 adapted to connect the apparatus to the controlled system 975 according to one embodiment. In one embodiment, the controller executes a command to stop or alter the manufacturing procedure of the controlled manufacturing system in response to detecting an anomaly.

Additionally, or alternatively, the controller can be configured to control different application based on results of the diagnosis. For example, the controller can submit results of the diagnosis to an application not directly involved to a manufacturing process. For example, in some embodiments, the apparatus 900 is connected to an application interface 980 through the bus 906 adapted to connect the apparatus 900 to an application device 985 that can operate based on results of anomaly detection.

In some embodiments, the structure of neurons 932 is selected based on a structure of the controlled system. For example, in one embodiment, in the neural network 931, a number of nodes in the input layer equals a multiple of a number of the sources of signals in the system. For example, if the multiple equals one, the number of nodes in the input layer equals the number of the sources of signals in the system. In such a manner, each node can be matched to a source signal. In some implementations, however, the multiple is greater than one, such that multiple nodes can be associated with the common source of signal. In those implementations, the neural network is a time delay neural network (TDNN), and the multiple for the number of nodes in the input layer equals a number of time steps in the delay of the TDNN.

Additionally, a number of node in hidden layers can also be selected based on a number of source signal. For example, in one embodiment, a number of nodes in the first hidden layer following the input layer equals the number of the sources of signals. This embodiment also gives physical meaning to the input layer to represent the physical structure of the controlled system. In addition, this embodiment allows the first most important tier of connections in the neural network, i.e., the connections between the input layer and the first hidden layer to represent the connectivity among the events in the system represented by the nodes. Specifically, the input layer is partially connected to the first hidden layer based on probabilities of subsequent occurrence of the events in different sources of signals.

In various embodiments, the probability of subsequent occurrence of the events in the pair of the different sources of signals is a function of a frequency of the subsequent occurrence of the events in the signals collected over a period. For example, in some implementations, the subsequent occurrence of the events in the pair of the different sources of signals is a consecutive occurrence of events in a time sequence of all events of the system. In alternative implementations, the subsequent occurrence can allow a predetermined number of intervening events. This implementation adds flexibility into the structure of the neural network making the neural network adaptable to different requirements of the anomaly detection.

Fig. 10A shows a block diagram of a method used by a neural network trainer 933 to train the neural network 931 according to one embodiment. In this embodiment, the structure 932 of the neural network is determined from the probabilities of the subsequent occurrence of events, which are in turn functions of the frequencies of subsequent occurrence of events. To that end, the embodiment evaluates the signals 1005 from the source of signals collected over a period of time to determine 1010 frequencies 1015 of subsequent occurrence of events within the period of time for different combinations of pairs of sources of signals. For example, the embodiment determines the frequencies as shown in Figures 4A, 4B, 5A, and 5B and corresponding description thereof.

Next, the embodiment determines 1020 probabilities 1025 of the subsequent occurrence of events for different combinations of the pairs of sources of signals based on the frequencies of subsequent occurrence of events within the period of time. The embodiment can use various statistical analysis of the frequencies to derive the probabilities 1025. For example, some implementations use equation (2) to determine the probability of subsequent occurrence of events for a pair of signals.

This embodiment is based on recognition that the complex manufacturing system can have different types of events with different inherent frequencies. For example, the system can be designed such that under normal operations a first event is ten times more frequent than a second event. Thus, the fact that the second event appears after the first event only one out of ten times is not indicative by itself of the strength of dependency of the second event on the first event. The statistical methods can consider the natural frequencies of events in determining the probabilities of the subsequent occurrences 1025. In this case, the probability of the subsequent occurrence is at most 0.1.

After, the probabilities are determined, the embodiment compares 1030 the probabilities 1025 of the subsequent occurrence of events for different combinations of pairs of sources of signals with a threshold 1011 to determine a connectivity structure of the neural network 1035. This embodiment allows using a single threshold 1011, which simplifies its implementation. Example of the connectivity structure is a connectivity matrix 600 of Figure 6A and 610 of Figure 6B.

Fig. 10B shows a block diagram of a method used by a neural network trainer 933 to train the neural network 931 according to alternative embodiment. In this embodiment, the connectivity structure of the neural network 1035 is determined directly from the frequencies of subsequent occurrence 1015. The embodiment compares 1031 the frequencies of the subsequent occurrence 1015 of events for different combinations of pairs of sources of signals with one or several thresholds 1012 to determine a connectivity structure of the neural network 1035. This embodiment is more deterministic than the embodiment of Figure 10A.

After the connectivity structure of the neural network 1035 is determined, the embodiments of Figure 10A and Figure 10B form 1040 the neural network 1045 according to the structure of the neural network 1035. For example, the neural network includes an input layer, an output layer and a number of hidden layers. The number of nodes in the input layer of the neural network equals a first multiple of a number of the source of signals in the system, and a number of nodes in the first hidden layer following the input layer equals a second multiple of the number of the sources of signals. The first and the second multiples can be the same or different. In addition, the input layer is partially connected to the first hidden layer according to the connectivity structure.

Next, the embodiments train 1050 the neural network 1045 using the signals 1055 collected over the period of time. The signals 1055 can be the same or different from the signals 1005. The training 1050 optimizes parameters of the neural network 1045. The training can use different methods to optimize the weights of the network such as stochastic gradient descent.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. A processor may be implemented using circuitry in any suitable format.

Also, the embodiments of the invention may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. An apparatus for controlling a system including a plurality of sources of signals, the sources causing a plurality of events, comprising:

   an input interface (910) to receive signals from the sources of signals;
   a memory (940) to store a neural network (931) trained to diagnose a control state of the system, wherein the neural network (931) includes a sequence of layers, each layer includes a set of nodes, each node of an input layer and a first hidden layer following the input layer corresponds to a source of signal in the system, wherein a pair of nodes from neighboring layers corresponding to a pair of different sources of signals are connected in the neural network (931) only when a probability of subsequent occurrence of the events in the pair of the different sources of signals is above a threshold, such that the neural network (931) is a partially connected neural network (931), wherein the probability of subsequent occurrence of the events is selected based on a frequency of such subsequent occurrence in a training data used to train the neural network;
   a processor (920) to submit the signals into the neural network (931) to produce the control state of the system; and
   a controller (950) to execute a control action selected according to the control state of the system,
   wherein a number of nodes in the input layer equals a first multiple of a number of the sources of signals in the system, and a number of nodes in the first hidden layer following the input layer equals a second multiple of the number of the sources of signals,
   wherein the input layer is partially connected to the first hidden layer based on probabilities of subsequent occurrence of the events in different sources of signals, and
   wherein the probability of subsequent occurrence of the events of signal Si followed by events of signal Sj can be defined as

$$P(S_i, S_j) = \frac{c_{ij}}{\sum_{j=1}^{M} \sum_{i=1}^{M} c_{ij} - M}$$

where M is number of signals, cij is the number of times events of signal Si followed by events of signal Sj.

2. The apparatus of claim 1, wherein the neural network (931) is a time delay neural network (TDNN), and wherein the first multiple for the number of nodes in the input layer equals a number of time steps in the delay of the TDNN.

3. The apparatus of claim 2, wherein the TDNN is a time delay feedforward neural network trained based on a supervised learning or a time delay auto-encoder neural network trained based on an unsupervised learning.

4. The apparatus of claim 1, wherein the probability of subsequent occurrence of the events in the pair of the different sources of signals is a function of a frequency of the subsequent occurrence of the events in the signals collected over a period.

5. The apparatus of claim 1, further comprising:
   a neural network trainer (933) configured

   to evaluate the signals from the source of signals collected over a period of time to determine frequencies of subsequent occurrence of events within the period of time for different combinations of pairs of sources of signals;
   to determine probabilities of the subsequent occurrence of events for different combinations of the pairs of sources of signals based on the frequencies of subsequent occurrence of events within the period of time;
   to compare the probabilities of the subsequent occurrence of events for different combinations of pairs of sources of signals with the threshold to determine a connectivity structure of the neural network (931);
   to form the neural network (931) according to the connectivity structure of the neural network (931), such that the number of nodes in the input layer equals the first multiple of a number of the source of signals in the system, and the number of nodes in the first hidden layer following the input layer equals the second multiple of the number of the sources of signals, wherein the input layer is partially connected to the first hidden layer according to the connectivity structure; and
   to train the neural network (931) using the signals collected over the period of time.

6. The apparatus of claim 1, further comprising:
   a neural network trainer (933) configured

   to evaluate the signals from the source of signals collected over a period of time to determine frequencies of subsequent occurrence of events within the period of time for different combinations of pairs of sources of signals;
   to compare the frequencies of the subsequent occurrence of events for different combinations of pairs of sources of signals with the threshold to determine a connectivity structure of the neural network (931);
   to form the neural network (931) according to the connectivity structure of the neural network (931), such that the number of nodes in the input layer equals the first multiple of a number of the source of signals in the system, and the number of nodes in the first hidden layer following the input layer equals the second multiple of the number of the sources of signals, wherein the input layer is partially connected to the first hidden layer according to the connectivity structure; and
   to train the neural network (931) using the signals collected over the period of time.

7. The apparatus of claim 6, wherein the neural network trainer (933) forms a signal connection matrix representing the frequencies of the subsequent occurrence of the events.

8. The apparatus of claim 1, wherein the system is a manufacturing production line including one or combination of a process manufacturing and discrete manufacturing.

9. The apparatus of claim 1, wherein the subsequent occurrence of the events in the pair of the different sources of signals is a consecutive occurrence of events in a time sequence of all events of the system.

10. A method for controlling a system including a plurality of source of signals, the sources causing a plurality of events, wherein the method uses a processor (920) coupled to a memory (940) storing a neural network (931) trained to diagnose a control state of the system, wherein the processor (920) is coupled with stored instructions implementing the method, wherein the instructions, when executed by the processor (920) carry out steps of the method, comprising:

receiving signals from the source of signals;
submitting the signals into the neural network (931) retrieved from the memory (940) to produce the control state of the system, wherein the neural network (931) includes a sequence of layers, each layer includes a set of nodes, each node of an input layer and a first hidden layer following the input layer corresponds to a source of signal in the system, wherein a pair of nodes from neighboring layers corresponding to a pair of different sources of signals are connected in the neural network (931) only when a probability of subsequent occurrence of the events in the pair of the different sources of signals is above a threshold, wherein the probability of subsequent occurrence of the events is selected based on a frequency of such subsequent occurrence in a training data used to train the neural network, and
executing a control action selected according to the control state of the system,
wherein a number of nodes in the input layer equals a first multiple of a number of the sources of signals in the system, and a number of nodes in the first hidden layer following the input layer equals a second multiple of the number of the sources of signals,
wherein the input layer is partially connected to the first hidden layer based on probabilities of subsequent occurrence of the events in different sources of signals, and
wherein the probability of subsequent occurrence of the events of signal Si followed by events of signal Sj can be defined as

$$P(S_i, S_j) = \frac{c_{ij}}{\sum_{j=1}^{M} \sum_{i=1}^{M} c_{ij} - M}$$

where M is number of signals, cij is the number of times events of signal Si followed by events of signal Sj.

11. The method of claim 10, wherein the probability of subsequent occurrence of the events in the pair of the different sources of signals is a function of a frequency of the subsequent occurrence of the events in the signals collected over a period.

12. The method of claim 10, wherein the neural network (931) is a time delay neural network (TDNN), and wherein the first multiple for the number of nodes in the input layer equals a number of time steps in the delay of the TDNN, wherein the TDNN is a time delay feedforward neural network trained based on a supervised learning or a time delay auto-encoder neural network trained based on an unsupervised learning.

13. The method of claim 10, wherein the subsequent occurrence of the events in the pair of the different sources of signals is a consecutive occurrence of events in a time sequence of the events of the system.

14. A non-transitory computer readable storage medium embodied thereon a program executable by a processor (920) for performing a method for controlling a system including a plurality of source of signals, the sources causing a plurality of events, the method comprising:

receiving signals from the source of signals;
submitting the signals into a neural network (931) trained to diagnose a control state of the system to produce the control state of the system, wherein the neural network (931) includes a sequence of layers, each layer includes a set of nodes, each node of an input layer and a first hidden layer following the input layer corresponds to a source of signal in the system, wherein a pair of nodes from neighboring layers corresponding to a pair of different sources of signals are connected in the neural network (931) only when a probability of subsequent occurrence of the events in the pair of the different sources of signals is above a threshold, wherein the probability of subsequent occurrence of the events is selected based on a frequency of such subsequent occurrence in a training data used to train the neural network; and
executing a control action selected according to the control state of the system,
wherein a number of nodes in the input layer equals a first multiple of a number of the sources of signals in the system, and a number of nodes in the first hidden layer following the input layer equals a second multiple of the number of the sources of signals,

wherein the input layer is partially connected to the first hidden layer based on probabilities of subsequent occurrence of the events in different sources of signals, and

wherein the probability of subsequent occurrence of the events of signal Si followed by events of signal Sj can be defined as

$$P(S_i, S_j) = \frac{c_{ij}}{\sum_{j=1}^{M} \sum_{i=1}^{M} c_{ij} - M}$$

where M is number of signals, cij is the number of times events of signal Si followed by events of signal Sj.

15. The medium of claim 14, wherein the subsequent occurrence of the events in the pair of the different sources of signals is a consecutive occurrence of events in a time sequence of the events of the system.

16. The medium of claim 14, wherein the neural network (931) is a time delay neural network (TDNN) and the first multiple for the number of nodes in the input layer equals a number of time steps in the delay of the TDNN, wherein the TDNN is a time delay feedforward neural network trained based on a supervised learning or a time delay auto-encoder neural network trained based on an unsupervised learning.

17. The medium of claim 14, wherein the probability of subsequent occurrence of the events in the pair of the different sources of signals is a function of a frequency of the subsequent occurrence of the events in the signals collected over a period.

**Patentansprüche**

1. Vorrichtung zum Steuern eines Systems, aufweisend eine Vielzahl von Signalquellen, wobei die Quellen eine Vielzahl von Ereignissen bewirken, aufweisend:

eine Eingangsschnittstelle (910), um Signale aus den Signalquellen zu empfangen;
einen Speicher (940), um ein neuronales Netz (931), das trainiert wurde, einen Steuerzustand des Systems zu diagnostizieren, zu speichern, wobei das neuronale Netz (931) eine Folge von Schichten enthält, wobei jede Schicht einen Satz von Knoten enthält, wobei jeder Knoten einer Eingabeschicht und einer ersten verborgenen Schicht, die der Eingabeschicht folgt, einer Signalquelle in dem System entspricht, wobei ein Paar von Knoten aus benachbarten Schichten, die einem Paar von unterschiedlichen Signalquellen entsprechen, in dem neuronalen Netz (931) nur dann konnektiert sind, wenn eine Wahrscheinlichkeit des nachfolgenden Auftretens der Ereignisse in dem Paar der unterschiedlichen Signalquellen über einem Schwellenwert liegt, so dass das neuronale Netz (931) ein teilweise konnektiertes neuronales Netz (931) ist, wobei die Wahrscheinlichkeit des nachfolgenden Auftretens der Ereignisse auf der Grundlage einer Häufigkeit eines solchen nachfolgenden Auftretens in den zum Trainieren des neuronalen Netzes genutzten Trainingsdaten ausgewählt wird;
einen Prozessor (920), um die Signale in das neuronale Netz (931) einzuspeisen, um den Steuerzustand des Systems zu erstellen; und
eine Steuereinheit (950), um eine Steuerhandlung auszuführen, die gemäß dem Steuerzustand des Systems ausgewählt ist,
wobei eine Anzahl von Knoten in der Eingabeschicht einem ersten Vielfachen einer Anzahl der Signalquellen in dem System gleicht, und eine Anzahl von Knoten in der ersten verborgenen Schicht, die auf die Eingabeschicht folgt, einem zweiten Vielfachen der Anzahl der Signalquellen gleicht.
wobei die Eingabeschicht mit der ersten verborgenen Schicht teilweise konnektiert ist, basierend auf Wahrscheinlichkeiten des nachfolgenden Auftretens der Ereignisse in unterschiedlichen Signalquellen, und
wobei die Wahrscheinlichkeit des nachfolgenden Auftretens der Ereignisse des Signals $S_i$, gefolgt von Ereignissen des Signals $S_j$, definiert werden kann als

$$P(S_i, S_j) = \frac{c_{ij}}{\sum_{j=1}^{M} \sum_{i=1}^{M} c_{ij} - M}$$

wobei M die Anzahl von Signalen ist, $c_{ij}$ die Anzahl von Malen von Ereignissen des Signals $S_i$ gefolgt von Ereignissen des Signals $S_j$ ist.

2. Vorrichtung nach Anspruch 1, wobei das neuronale Netz (931) ein zeitverzögertes neuronales Netz ("time delay neural network", TDNN) ist, und wobei das erste Vielfache für die Anzahl von Knoten in der Eingabeschicht gleich einer Anzahl von Zeitschritten in der Verzögerung des TDNN ist.

3. Vorrichtung nach Anspruch 2, wobei das TDNN ein zeitverzögertes Feedforward neuronales Netz ist, das auf der Grundlage eines überwachten Lernens trainiert wird, oder ein zeitverzögertes Autoencoder neuronales Netz ist, das auf der Grundlage eines nicht überwachten Lernens trainiert wird.

4. Vorrichtung nach Anspruch 1, wobei die Wahrscheinlichkeit des nachfolgenden Auftretens der Ereignisse in dem Paar der unterschiedlichen Signalquellen eine Funktion einer Häufigkeit des nachfolgenden Auftretens der Ereignisse in den über einen Zeitraum gesammelten Signalen ist.

5. Vorrichtung nach Anspruch 1, ferner aufweisend:
einen Neuronales-Netz-Trainer (933), der eingerichtet ist:

die über einen Zeitraum gesammelten Signale aus der Signalquelle auszuwerten, um Häufigkeiten des nachfolgenden Auftretens von Ereignissen innerhalb des Zeitraums für unterschiedliche Kombinationen von Signalquellenpaaren zu bestimmen;
Wahrscheinlichkeiten des nachfolgenden Auftretens von Ereignissen für unterschiedliche Kombinationen der Signalquellenpaare auf der Grundlage der Häufigkeiten des nachfolgenden Auftretens von Ereignissen innerhalb des Zeitraums zu bestimmen;
die Wahrscheinlichkeiten des nachfolgenden Auftretens von Ereignissen für unterschiedliche Kombinationen von Signalquellenpaaren mit dem Schwellenwert zu vergleichen, um eine Konnektivitätsstruktur des neuronalen Netzes zu bestimmen (931);
das neuronale Netz (931) gemäß der Konnektivitätsstruktur des neuronalen Netzes (931) zu bilden, so dass die Anzahl von Knoten in der Eingabeschicht gleich dem ersten Vielfachen einer Anzahl von Signalquellen in dem System ist, und die Anzahl von Knoten in der ersten verborgenen Schicht, die auf die Eingabeschicht folgt, gleich dem zweiten Vielfachen der Anzahl der Signalquellen ist, wobei die Eingabeschicht mit der ersten verborgenen Schicht gemäß der Konnektivitätsstruktur teilweise konnektiert ist; und
das neuronale Netz (931) anhand der über den Zeitraum gesammelten Signale zu trainieren.

6. Vorrichtung nach Anspruch 1, ferner aufweisend:
einen Neuronales-Netz-Trainer (933), der eingerichtet ist:

die über einen Zeitraum gesammelten Signale aus der Signalquelle auszuwerten, um Häufigkeiten des nachfolgenden Auftretens von Ereignissen innerhalb des Zeitraums für unterschiedliche Kombinationen von Signalquellenpaaren zu bestimmen;
die Häufigkeiten des nachfolgenden Auftretens von Ereignissen für unterschiedliche Kombinationen von Signalquellenpaaren mit dem Schwellenwert zu vergleichen, um eine Konnektivitätsstruktur des neuronalen Netzes zu bestimmen (931);
das neuronale Netz (931) gemäß der Konnektivitätsstruktur des neuronalen Netzes (931) zu bilden, so dass die Anzahl von Knoten in der Eingabeschicht gleich dem ersten Vielfachen einer Anzahl von Signalquellen in dem System ist, und die Anzahl von Knoten in der ersten verborgenen Schicht, die auf die Eingabeschicht folgt, gleich dem zweiten Vielfachen der Anzahl der Signalquellen ist, wobei die Eingabeschicht mit der ersten verborgenen Schicht gemäß der Konnektivitätsstruktur teilweise konnektiert ist; und
das neuronale Netz (931) anhand der über den Zeitraum gesammelten Signale zu trainieren.

7. Vorrichtung nach Anspruch 6, wobei der Neuronales-Netz-Trainer (933) eine Signalverbindungsmatrix bildet, welche die Häufigkeiten des nachfolgenden Auftretens der Ereignisse darstellt.

8. Vorrichtung nach Anspruch 1, wobei es sich bei dem System um eine Fertigungs-Produktionslinie handelt, die eine oder eine Kombination aus einer Prozessfertigung und einer diskreten Fertigung umfasst.

9. Vorrichtung nach Anspruch 1, wobei das nachfolgende Auftreten der Ereignisse in dem Paar von unterschiedlichen Signalquellen ein aufeinanderfolgendes Auftreten von Ereignissen in einer zeitlichen Abfolge aller Ereignisse des Systems ist.

10. Verfahren zur Steuerung eines Systems, einschließlich einer Vielzahl von Signalquellen, wobei die Quellen eine Vielzahl von Ereignissen bewirken, wobei das Verfahren einen Prozessor (920) nutzt, der mit einem Speicher (940) gekoppelt ist, der ein neuronales Netz (931) speichert, das trainiert wurde, um einen Steuerzustand des Systems zu diagnostizieren, wobei der Prozessor (920) mit gespeicherten Anweisungen gekoppelt ist, die das Verfahren implementieren, wobei die Anweisungen bei Ausführung durch den Prozessor (920) Schritte des Verfahrens ausführen, aufweisend:

Empfangen von Signalen aus der Signalquelle;
Einspeisen der Signale in das neuronale Netz (931), das aus dem Speicher (940) abgerufen wird, um den Steuerzustand des Systems zu erstellen, wobei das neuronale Netz (931) eine Folge von Schichten enthält, wobei jede Schicht einen Satz von Knoten enthält, wobei jeder Knoten einer Eingabeschicht und einer ersten verborgenen Schicht, die der Eingabeschicht folgt, einer Signalquelle in dem System entspricht, wobei ein Paar von Knoten aus benachbarten Schichten, die einem Paar von unterschiedlichen Signalquellen entsprechen, in dem neuronalen Netz (931) nur dann konnektiert werden, wenn eine Wahrscheinlichkeit des nachfolgenden Auftretens der Ereignisse in dem Paar der unterschiedlichen Signalquellen über einem Schwellenwert liegt, wobei die Wahrscheinlichkeit des nachfolgenden Auftretens der Ereignisse auf der Grundlage einer Häufigkeit eines solchen nachfolgenden Auftretens in den zum Trainieren des neuronalen Netzes genutzten Trainingsdaten ausgewählt wird, und
Ausführen einer Steuerhandlung, die gemäß dem Steuerzustand des Systems ausgewählt wurde, wobei eine Anzahl von Knoten in der Eingabeschicht einem ersten Vielfachen einer Anzahl der Signalquellen in dem System gleicht, und eine Anzahl von Knoten in der ersten verborgenen Schicht, die auf die Eingabeschicht folgt, einem zweiten Vielfachen der Anzahl von Signalquellen gleicht, wobei die Eingabeschicht mit der ersten verborgenen Schicht teilweise konnektiert ist, basierend auf Wahrscheinlichkeiten des nachfolgenden Auftretens der Ereignisse in unterschiedlichen Signalquellen, und wobei die Wahrscheinlichkeit des nachfolgenden Auftretens der Ereignisse des Signals $S_i$, gefolgt von Ereignissen des Signals $S_j$, definiert werden kann als

$$P(S_i, S_j) = \frac{c_{ij}}{\sum_{j=1}^{M} \sum_{i=1}^{M} c_{ij} - M}$$

wobei M die Anzahl von Signalen ist, $c_{ij}$ die Anzahl von Malen von Ereignissen des Signals $S_i$ gefolgt von Ereignissen des Signals $S_j$ ist.

11. Verfahren nach Anspruch 10, wobei die Wahrscheinlichkeit des nachfolgenden Auftretens der Ereignisse in dem Paar der unterschiedlichen Signalquellen eine Funktion einer Häufigkeit des nachfolgenden Auftretens der Ereignisse in den über einen Zeitraum gesammelten Signalen ist.

12. Verfahren nach Anspruch 10, wobei das neuronale Netz (931) ein zeitverzögertes neuronales Netz ("time delay neural network", TDNN) ist, und wobei das erste Vielfache für die Anzahl von Knoten in der Eingabeschicht gleich einer Anzahl von Zeitschritten in der Verzögerung des TDNN ist, wobei das TDNN ein zeitverzögertes neuronales Netz mit Feedforward ist, das auf der Grundlage eines überwachten Lernens trainiert wird, oder ein neuronales Netz mit Autoencoder-Zeitverzögerung ist, das auf der Grundlage eines nicht überwachten Lernens trainiert wird.

13. Verfahren nach Anspruch 10, wobei das nachfolgende Auftreten der Ereignisse in dem Paar der unterschiedlichen Signalquellen ein aufeinanderfolgendes Auftreten von Ereignissen in einer zeitlichen Abfolge der Ereignisse des Systems ist.

14. Nicht-transitorisches, computerlesbares Speichermedium, auf dem ein Programm verkörpert ist, das von einem Prozessor (920) ausgeführt werden kann, um ein Verfahren zum Steuern eines Systems, einschließlich einer Vielzahl von Signalquellen, durchzuführen, wobei die Quellen eine Vielzahl von Ereignissen bewirken, wobei das Verfahren aufweist:

Empfangen von Signalen aus der Signalquelle;
Einspeisen der Signale in das neuronale Netz (931), der trainiert ist, einen Steuerzustand des Systems zu diagnostizieren, um den Steuerzustand des Systems zu erstellen, wobei das neuronale Netz (931) eine Folge von Schichten enthält, wobei jede Schicht einen Satz von Knoten enthält, wobei jeder Knoten einer Eingabeschicht und einer ersten verborgenen Schicht, die der Eingabeschicht folgt, einer Signalquelle in dem System entspricht, wobei ein Paar von Knoten aus benachbarten Schichten, die einem Paar von unterschiedlichen Signalquellen entsprechen, in dem neuronalen Netz (931) nur dann konnektiert werden, wenn eine Wahrscheinlichkeit des nachfolgenden Auftretens der Ereignisse in dem Paar der unterschiedlichen Signalquellen über einem Schwellenwert liegt, wobei die Wahrscheinlichkeit des nachfolgenden Auftretens der Ereignisse auf der Grundlage einer Häufigkeit eines solchen nachfolgenden Auftretens in den zum Trainieren des neuronalen Netzes genutzten Trainingsdaten ausgewählt wird, und

Ausführen einer Steuerhandlung, die gemäß dem Steuerzustand des Systems ausgewählt wurde,

wobei eine Anzahl von Knoten in der Eingabeschicht einem ersten Vielfachen einer Anzahl der Signalquellen in dem System gleicht, und eine Anzahl von Knoten in der ersten verborgenen Schicht, die auf die Eingabeschicht folgt, einem zweiten Vielfachen der Anzahl von Signalquellen gleicht,

wobei die Eingabeschicht mit der ersten verborgenen Schicht teilweise konnektiert ist, basierend auf Wahrscheinlichkeiten des nachfolgenden Auftretens der Ereignisse in unterschiedlichen Signalquellen, und

wobei die Wahrscheinlichkeit des nachfolgenden Auftretens der Ereignisse des Signals $S_i$, gefolgt von Ereignissen des Signals $S_j$, definiert werden kann als

$$P(S_i, S_j) = \frac{c_{ij}}{\sum_{j=1}^{M} \sum_{i=1}^{M} c_{ij} - M}$$

wobei M die Anzahl von Signalen ist, $c_{ij}$ die Anzahl von Malen von Ereignissen des Signals $S_i$ gefolgt von Ereignissen des Signals $S_j$ ist.

15. Medium nach Anspruch 14, wobei das nachfolgende Auftreten der Ereignisse in dem Paar der unterschiedlichen Signalquellen ein aufeinanderfolgendes Auftreten von Ereignissen in einer zeitlichen Abfolge der Ereignisse des Systems ist.

16. Medium nach Anspruch 14, wobei das neuronale Netz (931) ein zeitverzögertes neuronales Netz (TDNN) ist, und wobei das erste Vielfache für die Anzahl von Knoten in der Eingabeschicht gleich einer Anzahl von Zeitschritten in der Verzögerung des TDNN ist, wobei das TDNN ein zeitverzögertes neuronales Netz mit Feedforward ist, das auf der Grundlage eines überwachten Lernens trainiert wird, oder ein neuronales Netz mit Autoencoder-Zeitverzögerung ist, das auf der Grundlage eines nicht überwachten Lernens trainiert wird.

17. Medium nach Anspruch 14, wobei die Wahrscheinlichkeit des nachfolgenden Auftretens der Ereignisse in dem Paar der unterschiedlichen Signalquellen eine Funktion einer Häufigkeit des nachfolgenden Auftretens der Ereignisse in den über einen Zeitraum gesammelten Signalen ist.

**Revendications**

1. Appareil pour contrôler un système comprenant une pluralité de sources de signaux, les sources provoquant une pluralité d'événements, comprenant :

une interface d'entrée (910) pour recevoir des signaux des sources de signaux;
une mémoire (940) pour stocker un réseau neuronal (931) entraîné à diagnostiquer un état de contrôle du système, dans lequel le réseau neuronal (931) comprend une séquence de couches, chaque couche comprend un ensemble de noeuds, chaque noeud d'une couche d'entrée et d'une première couche cachée suivant la couche d'entrée correspond à une source de signal dans le système, dans lequel une paire de noeuds de couches voisines correspondant à une paire de sources de signaux différentes est connectée dans le réseau neuronal (931) uniquement lorsqu'une probabilité d'occurrence ultérieure des événements dans la paire de sources de signaux différentes est supérieure à un seuil, de sorte que le réseau neuronal (931) est un réseau neuronal partiellement connecté (931), dans lequel la probabilité d'occurrence ultérieure des événements est sélectionnée sur la base d'une fréquence d'une telle occurrence ultérieure dans des données d'entraînement utilisées pour entraîner le réseau neuronal ;
un processeur (920) pour soumettre les signaux au réseau neuronal (931) afin de produire l'état de contrôle du système ; et

un contrôleur (950) pour exécuter une action de contrôle sélectionnée selon l'état de contrôle du système,

dans lequel le nombre de noeuds dans la couche d'entrée est égal à un premier multiple du nombre de sources de signaux dans le système, et un nombre de noeuds dans la première couche cachée suivant la couche d'entrée est égal à un second multiple du nombre de sources de signaux.

dans lequel la couche d'entrée est partiellement connectée à la première couche cachée sur la base des probabilités d'occurrence ultérieure des événements dans différentes sources de signaux, et

dans lequel la probabilité d'occurrence ultérieure des événements du signal $S_i$ suivis des événements du signal $S_j$ peut être définie comme suit

$$P\left(S_i, S_j\right) = \frac{c_{ij}}{\sum_{j=1}^{M} \sum_{i=1}^{M} c_{ij} - M}$$

où M est le nombre de signaux, $c_{ij}$ est le nombre de fois où les événements du signal $S_i$ sont suivis par les événements du signal $S_j$.

2. Appareil selon la revendication 1, dans lequel le réseau neuronal (931) est un réseau neuronal à retardement (TDNN), et dans lequel le premier multiple du nombre de noeuds dans la couche d'entrée est égal à un nombre d'intervalles de temps dans le retard du TDNN.

3. Appareil selon la revendication 2, dans lequel le TDNN est un réseau neuronal d'anticipation à retardement formé sur la base d'un apprentissage supervisé ou un réseau neuronal auto-encodeur à retardement formé sur la base d'un apprentissage non supervisé.

4. Appareil selon la revendication 1, dans lequel la probabilité d'occurrence ultérieure des événements dans la paire des différentes sources de signaux est fonction d'une fréquence d'occurrence ultérieure des événements dans les signaux collectés sur une période.

5. Appareil selon la revendication 1, comprenant en outre :
un entraîneur de réseau neuronal (933) configuré

pour évaluer les signaux provenant de la source de signaux recueillis au cours d'une période de temps afin de déterminer les fréquences d'occurrence ultérieure d'événements dans la période de temps pour différentes combinaisons de paires de sources de signaux;
pour déterminer les probabilités d'occurrence ultérieure des événements pour différentes combinaisons des paires de sources de signaux sur la base des fréquences d'occurrence ultérieure des événements dans la période de temps ;
pour comparer les probabilités d'occurrence ultérieure d'événements pour différentes combinaisons de paires de sources de signaux avec le seuil afin de déterminer une structure de connectivité du réseau neuronal (931) ;
pour former le réseau neuronal (931) selon la structure de connectivité du réseau neuronal (931), de sorte que le nombre de noeuds dans la couche d'entrée est égal au premier multiple du nombre de sources de signaux dans le système, et que le nombre de noeuds dans la première couche cachée suivant la couche d'entrée est égal au deuxième multiple du nombre de sources de signaux, dans lequel la couche d'entrée est partiellement connectée à la première couche cachée selon la structure de connectivité ; et
pour entraîner le réseau neuronal (931) à l'aide des signaux recueillis au cours de la période de temps.

6. Appareil selon la revendication 1, comprenant en outre :
un entraîneur de réseau neuronal (933) configuré

pour évaluer les signaux provenant de la source de signaux recueillis au cours d'une période de temps afin de déterminer les fréquences d'occurrence ultérieure d'événements dans la période de temps pour différentes combinaisons de paires de sources de signaux ;
pour comparer les fréquences d'occurrence ultérieure d'événements pour différentes combinaisons de paires de sources de signaux avec le seuil afin de déterminer une structure de connectivité du réseau neuronal (931) ;
pour former le réseau neuronal (931) selon la structure de connectivité du réseau neuronal (931), de sorte que le nombre de noeuds dans la couche d'entrée est égal au premier multiple du nombre de sources de signaux dans le système, et que le nombre de noeuds dans la première couche cachée suivant la couche d'entrée est égal au deuxième multiple du nombre de sources de signaux, dans lequel la couche d'entrée est partiellement connectée à la première couche cachée selon la structure de connectivité ; et

pour entraîner le réseau neuronal (931) à l'aide des signaux recueillis au cours de la période de temps.

7. Appareil selon la revendication 6, dans lequel l'entraîneur de réseau neuronal (933) forme une matrice de connexion de signaux représentant les fréquences d'occurrence ultérieure des événements.

8. Appareil selon la revendication 1, dans lequel le système est une chaîne de fabrication comprenant un processus ou une combinaison de processus de fabrication et de fabrication discrète.

9. Appareil selon la revendication 1, dans lequel l'occurrence ultérieure des événements dans la paire des différentes sources de signaux est une occurrence consécutive d'événements dans une séquence temporelle de tous les événements du système.

10. Procédé de contrôle d'un système comprenant une pluralité de sources de signaux, les sources provoquant une pluralité d'événements, dans lequel le procédé utilise un processeur (920) couplé à une mémoire (940) stockant un réseau neuronal (931) entraîné à diagnostiquer un état de contrôle du système, dans lequel le processeur (920) est couplé à des instructions stockées mettant en oeuvre le procédé, dans lequel les instructions, lorsqu'elles sont exécutées par le processeur (920), exécutent les étapes du procédé, comprenant :

recevoir des signaux de la source de signaux ;

soumettre les signaux au réseau neuronal (931) récupérés de la mémoire (940) pour produire l'état de contrôle du système, dans lequel le réseau neuronal (931) comprend une séquence de couches, chaque couche comprend un ensemble de noeuds, chaque noeud d'une couche d'entrée et d'une première couche cachée suivant la couche d'entrée correspond à une source de signal dans le système, dans lequel une paire de noeuds de couches voisines correspondant à une paire de sources de signaux différentes est connectée dans le réseau neuronal (931) uniquement lorsqu'une probabilité d'occurrence ultérieure des événements dans la paire de sources de signaux différentes est supérieure à un seuil, dans lequel la probabilité d'occurrence ultérieure des événements est sélectionnée sur la base d'une fréquence d'une telle occurrence ultérieure dans des données d'entraînement utilisées pour entraîner le réseau neuronal, et

exécuter une action de contrôle sélectionnée selon l'état de contrôle du système,

dans lequel le nombre de noeuds dans la couche d'entrée est égal à un premier multiple du nombre de sources de signaux dans le système, et un nombre de noeuds dans la première couche cachée suivant la couche d'entrée est égal à un second multiple du nombre de sources de signaux,

dans lequel la couche d'entrée est partiellement connectée à la première couche cachée sur la base des probabilités d'occurrence ultérieure des événements dans différentes sources de signaux, et

dans lequel la probabilité d'occurrence ultérieure des événements du signal $S_i$ suivis des événements du signal $S_j$ peut être définie comme suit

$$P(S_i, S_j) = \frac{c_{ij}}{\sum_{j=1}^{M} \sum_{i=1}^{M} c_{ij} - M}$$

où M est le nombre de signaux, $c_{ij}$ est le nombre de fois où les événements du signal $S_i$ sont suivis par les événements du signal $S_j$.

11. Procédé selon la revendication 10, dans lequel la probabilité d'occurrence ultérieure des événements dans la paire des différentes sources de signaux est fonction d'une fréquence d'occurrence ultérieure des événements dans les signaux collectés sur une période.

12. Procédé selon la revendication 10, dans lequel le réseau neuronal (931) est un réseau neuronal à retardement (TDNN), et dans lequel le premier multiple du nombre de noeuds dans la couche d'entrée est égal à un nombre d'intervalles de temps dans le retard du TDNN, dans lequel le TDNN est un réseau neuronal d'anticipation à retardement formé sur la base d'un apprentissage supervisé ou un réseau neuronal auto-encodeur à retardement formé sur la base d'un apprentissage non supervisé.

**13.** Procédé selon la revendication 10, dans lequel l'occurrence ultérieure des événements dans la paire des différentes sources de signaux est une occurrence consécutive d'événements dans une séquence temporelle des événements du système.

**14.** Support de stockage lisible par ordinateur non transitoire sur lequel est incorporé un programme exécutable par un processeur (920) pour l'exécution d'un procédé de contrôle d'un système comprenant une pluralité de sources de signaux, les sources causant une pluralité d'événements, le procédé comprenant :

recevoir des signaux de la source de signaux ;
soumettre les signaux dans un réseau neuronal (931) entraîné pour diagnostiquer un état de contrôle du système pour produire l'état de contrôle du système, dans lequel le réseau neuronal (931) comprend une séquence de couches, chaque couche comprend un ensemble de noeuds, chaque noeud d'une couche d'entrée et d'une première couche cachée suivant la couche d'entrée correspond à une source de signal dans le système, dans lequel une paire de noeuds de couches voisines correspondant à une paire de sources de signaux différentes est connectée dans le réseau neuronal (931) uniquement lorsqu'une probabilité d'occurrence ultérieure des événements dans la paire de sources de signaux différentes est supérieure à un seuil, dans lequel la probabilité d'occurrence ultérieure des événements est sélectionnée sur la base d'une fréquence d'une telle occurrence ultérieure dans des données d'entraînement utilisées pour entraîner le réseau neuronal, et
exécuter une action de contrôle sélectionnée selon l'état de contrôle du système,
dans lequel le nombre de noeuds dans la couche d'entrée est égal à un premier multiple du nombre de sources de signaux dans le système, et un nombre de noeuds dans la première couche cachée suivant la couche d'entrée est égal à un second multiple du nombre de sources de signaux,
dans lequel la couche d'entrée est partiellement connectée à la première couche cachée sur la base des probabilités d'occurrence ultérieure des événements dans différentes sources de signaux, et
dans lequel la probabilité d'occurrence ultérieure des événements du signal $S_i$ suivis des événements du signal $S_j$ peut être définie comme suit

$$P\left(S_i, S_j\right) = \frac{c_{ij}}{\sum_{j=1}^{M} \sum_{i=1}^{M} c_{ij} - M}$$

où M est le nombre de signaux, $c_{ij}$ est le nombre de fois où les événements du signal $S_i$ sont suivis par les événements du signal $S_j$.

**15.** Support selon la revendication 14, dans lequel l'occurrence ultérieure des événements dans la paire des différentes sources de signaux est une occurrence consécutive d'événements dans une séquence temporelle des événements du système.

**16.** Support selon la revendication 14, dans lequel le réseau neuronal (931) est un réseau neuronal à retardement (TDNN), et le premier multiple du nombre de noeuds dans la couche d'entrée est égal à un nombre d'intervalles de temps dans le retard du TDNN, dans lequel le TDNN est un réseau neuronal d'anticipation à retardement formé sur la base d'un apprentissage supervisé ou un réseau neuronal auto-encodeur à retardement formé sur la base d'un apprentissage non supervisé.

**17.** Support selon la revendication 14, dans lequel la probabilité d'occurrence ultérieure des événements dans la paire des différentes sources de signaux est fonction d'une fréquence d'occurrence ultérieure des événements dans les signaux collectés sur une période.

FIG. 1

EP 3 776 113 B1

**Feedforward Neural Network**

**FIG. 2**

EP 3 776 113 B1

**Autoencoder**

**FIG. 3**

EP 3 776 113 B1

120

Training data pool

410

Generate events for all training data signals

420

Arrange events into a sequence according
to the event occurrence time

430

Extract distinct events from the event sequence

FIG. 4A

Signals

$S_3$   OFF   ON   OFF   ON

440

$S_2$   ON   OFF   ON   OFF

$S_1$   OFF   ON   OFF   ON

10:00 10:01 10:02 10:03 10:04 10:05 10:06 10:07 10:08 10:09 10:10 10:11   Time

⇩

450
$E_{11} = (S_1, ON, 10:01am), E_{12} = (S_1, OFF, 10:06am), E_{13} = (S_1, ON, 10:09am)$

460
$E_{21} = (S_2, OFF, 10:02am), E_{22} = (S_2, ON, 10:05am), E_{23} = (S_2, OFF, 10:08am)$

470
$E_{31} = (S_3, ON, 10:03am), E_{32} = (S_3, OFF, 10:04am), E_{33} = (S_3, ON, 10:07am)$

⇩

480
$\{E_i\}_1^9 = \{E_{11}, E_{21}, E_{31}, E_{32}, E_{22}, E_{12}, E_{33}, E_{23}, E_{13}\}$

490
$\{\hat{E}_i\}_1^6 = \{\hat{E}_1 = (S_1, ON), \hat{E}_2 = (S_1, OFF), \hat{E}_3 = (S_2, ON), \hat{E}_4 = (S_2, OFF), \hat{E}_5 = (S_3, ON), \hat{E}_6 = (S_3, OFF)\}$

## FIG. 4B

| | $\widehat{E}_1$ | $\widehat{E}_2$ | $\widehat{E}_3$ | ... | $\widehat{E}_K$ |
|---|---|---|---|---|---|
| $\widehat{E}_1$ | 0 | $e_{12}$ | $e_{13}$ | ... | $e_{1K}$ |
| $\widehat{E}_2$ | $e_{21}$ | 0 | $e_{23}$ | ... | $e_{2K}$ |
| $\widehat{E}_3$ | $e_{31}$ | $e_{32}$ | 0 | ... | $e_{3K}$ |
| ⋮ | ⋮ | ⋮ | ⋮ | ⋮ | ⋮ |
| $\widehat{E}_K$ | $e_{K1}$ | $e_{K2}$ | $e_{K3}$ | ... | 0 |

**FIG. 5A**

|  | $\widehat{E}_1$ | $\widehat{E}_2$ | $\widehat{E}_3$ | $\widehat{E}_4$ | $\widehat{E}_5$ | $\widehat{E}_6$ |
|---|---|---|---|---|---|---|
| $\widehat{E}_1$ | **0** | 0 | 0 | 1 | 0 | 0 |
| $\widehat{E}_2$ | 0 | **0** | 0 | 0 | 0 | 1 |
| $\widehat{E}_3$ | 0 | 1 | **0** | 0 | 0 | 0 |
| $\widehat{E}_4$ | 0 | 1 | 0 | **0** | 1 | 0 |
| $\widehat{E}_5$ | 0 | 0 | 0 | 0 | **0** | 1 |
| $\widehat{E}_6$ | 0 | 0 | 1 | 1 | 0 | **0** |

**FIG. 5B**

EP 3 776 113 B1

$$600 \quad \begin{bmatrix} 1 & c_{12} & c_{13} & c_{14} & \cdots & c_{1M} \\ c_{21} & 1 & c_{23} & c_{24} & \cdots & c_{2M} \\ c_{31} & c_{32} & 1 & c_{34} & \cdots & c_{3M} \\ c_{41} & c_{42} & c_{43} & 1 & \cdots & c_{4M} \\ \vdots & \vdots & \vdots & \vdots & \cdots & \vdots \\ c_{M1} & c_{M2} & c_{M3} & c_{M4} & \cdots & 1 \end{bmatrix}$$

**FIG. 6A**

$$610 \begin{bmatrix} \mathbf{1} & 1 & 1 \\ 2 & \mathbf{1} & 1 \\ 0 & 2 & \mathbf{1} \end{bmatrix}$$

**FIG. 6B**

EP 3 776 113 B1

FIG. 7

FIG. 8A

FIG. 8B

**FIG. 9**

EP 3 776 113 B1

EP 3 776 113 B1

**1005**

Signals collected over a period of time

**1010** — determine frequencies of subsequent occurrence of events within the period of time for different combinations of pairs of sources of signals

**1015** — frequencies of subsequent occurrence

**1020** — determine probabilities of the subsequent occurrence of events

**1025** — probabilities of the subsequent occurrence

**1011** — threshold

**1030** — compare the probabilities the subsequent occurrence of events for different combinations of pairs of sources of signals with threshold

**1035** — connectivity structure of the neural network

**1040** — form the neural network according to the structure of the neural network

**1045** — neural network

**1055** — Signals collected over a period of time

**1050** — train the neural network using the signals collected over the period of time

## FIG. 10A

**1005**
Signals collected over a period of time

**1010** determine frequencies of subsequent occurrence of events within the period of time for different combinations of pairs of sources of signals

**1015** frequencies of subsequent occurrence

**1012** Threshold(s)

**1031** compare the frequencies of the subsequent occurrence of events for different combinations of pairs of sources of signals with threshold

**1035** connectivity structure of the neural network

**1040** form the neural network according to the structure of the neural network

**1045** neural network

**1055** Signals collected over a period of time

**1050** train the neural network using the signals collected over the period of time

**FIG. 10B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150277416 A
- US 20170031329 A1

- EP 1022632 A1